# EUROPÄISCHE PATENTSCHRIFT

(11) **EP 0 570 394 B1**
(45) Veröffentlichungstag und Bekanntmachung des Hinweises auf die Patenterteilung: **22.03.1995**
(21) Anmeldenummer: 92902947.8
(22) Anmeldetag: 31.01.1992
(51) Int. Cl.: F16D 23/12, F16D 25/08

(54) **STABILISIERUNGS- UND ABSTÜTZEINRICHTUNG FÜR DIE SCHWENKLAGERUNG EINES KUPPLUNGSHEBELS**
STABILISING AND SUPPORTING DEVICE FOR THE PIVOT OF A CLUTCH LEVER
DISPOSITIF DE STABILISATION ET DE SOUTIEN DU PALIER PIVOTANT DE LEVIER D'EMBRAYAGE

(30) Priorität: 08.02.1991 DE 4103931
(43) Veröffentlichungstag der Anmeldung: 24.11.1993
(73) Patentinhaber: INA Wälzlager Schaeffler KG, 91063 Herzogenaurach (DE)
(72) Erfinder: PARZEFALL, Walter, D-8526 Bubenreuth (DE)
(86) Internationale Anmeldenummer: EP9200203
(87) Internationale Veröffentlichungsnummer: WO9214073

(56) Entgegenhaltungen:
- EP-A- 0 086 060
- DE-C- 3 612 419
- FR-A- 2 166 694
- FR-A- 2 431 060
- GB-A- 2 055 421

## Beschreibung

Die Erfindung betrifft eine Stabilisierungs- und Abstützeinrichtung für die Schwenklagerung eines Kupplungsausrückhebels gemäß dem Oberbegriff des Anspruchs 1.

Bei Ausrückvorrichtungen von Kraftfahrzeugkupplungen ist der Kupplungsausrückhebel am einen Ende an einem Schwenkpunkt abgestützt, während am anderen Ende ein Betätigungsmittel angreift. Aus Fertigungsgründen liegen die Enden von Zungen der Tellerfeder der Kupplung nicht immer exakt in einer rechtwinklig zur Kupplungsachse verlaufenden Ebene. Daraus resultieren Tendenzen zur Taumelbewegung des Kupplungsausrücklagers. Die damit einhergehenden Vibrationen setzen sich auf den Kupplungshebel fort, was wegen der mit hoher Frequenz auftretenden Schläge zu einer erheblichen Lagerbeeinträchtigung führen kann.

Eine Stabilisierungs- und Abstützeinrichtung der vorgenannten Gattung ist aus der DE-PS 36 12 419 bekannt. Zur Vermeidung der vorstehend genannten Nachteile soll das dem Kupplungshebel zugewandte Ende des Befestigungsbolzens, der mit einem Gewindeschaft als Befestigungsabschnitt ausgestattet ist, als sphärisches Lagerelement ausgebildet sein. Das sphärische Lagerelement arbeitet mit einer entsprechenden Ausformung des Kupplungsausrückhebels zusammen, um die schwenkbare Lagerung des Kupplungsausrückhebels sicherzustellen. An beiden Seiten des Befestigungsbolzens ist je ein Stabilisierungsbereich vorgesehen, und zwar bspw. als auf den Befestigungsbolzen aufgestecktes Element mit zwei zur Längsachse des Bolzens radial verlaufenden Vorsprüngen, die am Kupplungsausrückhebel zur Anlage kommen und als Stabilisierungsbereiche wirken, insbesondere da das polymere Material zusätzlich schwingungsdämpfende Eigenschaft hat. Das sphärische Ende des Befestigungsbolzens und die Stabilisierungsbereiche greifen an unterschiedlichen Stellen des Kupplungsausrückhebels an, was die Einhaltung sehr enger Herstellungstoleranzen erforderlich macht und im Betrieb bei etwaiger, wenn auch nur geringfügiger, Abnutzung zu einer entweder nicht mehr korrekten Lagerung oder nicht mehr optimalen Stabilisierung führt.

Der Erfindung liegt daher die Aufgabe zugrunde, die Einrichtung der eingangs bezeichneten Gattung so auszubilden, daß stets sowohl eine optimale Stabilisierung als auch eine korrekte Schwenklagerung gewährleistet ist, wobei zugleich auf eine einfache und preiswerte Herstellbarkeit ebenso wie auf eine einfache Einbaubarkeit zu achten ist.

Diese Aufgabe wird durch die im kennzeichnenden Teil des Anspruchs 1 angegebenen Maßnahmen gelöst.

Vorteilhafte Weiterbildungen sind den Unteransprüchen entnehmbar.

Durch den erfindungsgemäß vorgesehenen Verbindungsabschnitt mit Sollbruchstelle, über den die Stabilisierungsbereiche im Herstellungszustand mit dem Befestigungsbolzen in Verbindung stehen, ist eine einstückige Herstellbarkeit der Einrichtung in ihrer Gesamtheit erreicht.

Da die Stabilisierungsbereiche aus polymerem Material herzustellen sind, ist zugleich die Gesamteinrichtung aus einem solchen Material herzustellen. Dies wiederum ermöglicht die Herstellung der Einrichtung bspw. im Wege der Spritzgießtechnik oder einer gleichwertigen Technik in einem einzigen Arbeitsgang. Die einstückige Ausführung führt weiter zu einer einfachen Einbaumöglichkeit, in dem die Einrichtung lediglich mit dem Axialabschnitt des Befestigungsbolzens in eine zugehörige Öffnung des Kupplungsausrückhebels einzuführen ist, wonach der eigentliche Bolzenabschnitt, der ein solcher ohne Gewinde ist, nur noch in eine Bohrung des Getriebegehäuses eingeführt werden muß. Damit ist der eigentliche Einbau in einfachster Form abgeschlossen; es muß lediglich noch unter Ausübung eines gewissen Axialdrucks zwischen Kupplungsausrückhebel und Getriebeflansch die Verbindung zwischen Befestigungsbolzen und Stabilisierungsbereichen im Bereich der Sollbruchstelle aufgebrochen werden, wonach der Funktionszustand erreicht ist. Die zugleich vorgesehen gegenseitige Verbindung der Stabilisierungsbereiche mittels des Verbindungssteges läßt über den am Befestigungsbolzen vorgesehenen verdickten Bereich eine Zentrierung der Stabilisierungsbereiche hinsichtlich der Längsachse des Befestigungsbolzens zu.

Diese Ausbildung erfüllt alle Forderungen zur Einfachheit der Herstellung und des Einbaus sowie das Erfordernis der Gewichtsersparnis.

Für die Anordnung des Verbindungsabschnitts zwischen dem Befestigungsbolzen und den Stabilisierungsbereichen empfiehlt sich die Anordnung an einem Flansch, da nach Abreißen der Sollbruchstelle etwa vorhandene Abrißvorsprünge die ordnungsgemäße Funktion nicht behindern.

Zweckmäßig sollten die Stabilisierungsbereiche an ihrer dem Axialabschnitt des Befestigungsbolzens zugewandten Seite je eine etwa halbzylindrische Außenfläche aufweisen und diese beiden Außenflächen miteinander fluchten. Selbstverständlich ist es aber auch möglich, diese Flächenausbildung am Kupplungsausrückhebel vorzusehen und dann die diesem zugewandten Flächenabschnitte der Schwenklagerung/Stabilisierungsbereiche entsprechend konkav auszubilden. Sowohl funktionell als auch herstellungstechnisch stellt dies eine gleichwertige Lösung dar.

Wegen des Leichtbaus, dem die Herstellung aus einem polymeren Material bereits Rechnung trägt, empfiehlt sich eine Hohlkörperausbildung der Stabilisierungsbereiche bei mit offener Ausbildung ihres rückwärtigen freien Endes und gegenseitiger Verbindung mittels eines Stegs mit zentrischer Durchtrittsöffnung für den verdickten Bereich.

Um die Schwenklager/Stabilisierungsbereiche im Funktionszustand der Einrichtung mittels des verdickten Bereichs des Befestigungsbolzens zentriert zu halten, sollte der genannte Steg an den beiden Hohlkörpern so angeordnet sein, daß der Abstand zwischen der dem Axialabschnitt zugewandten Fläche des Stegs und dem rückwärtigen Ende der Hohlkörper der axialen Länge des verdickten Bereichs des Bolzens entsprechen.

Dies bietet die weitere Möglichkeit, zur Gewichtsersparnis den Steg verhältnismäßig dünn auszubilden und die den Bolzen umgebende Durchtrittsöffnung des Stegs durch einen Axialansatz des Stegs bis in die Ebene des rückwärtigen Endes der Hohlkörper zu erstrecken.

Andererseits sollte der Abstand zwischen der dem Axialabschnitt zugewandten Fläche des Stegs und dem Scheitel der Außenflächen der Hohlkörper mindestens der Summe der axialen Längen des Flanschs und des Verlängerungsabschnitts entsprechen, da dies gewährleistet, daß der Verlängerungsabschnitt, vom freien Bolzenende aus gesehen, vollständig vor den Außenflächen der Hohlkörper liegt und damit deren beeinträchtigungsfreie Anlage an der zugehörigen Fläche des Kupplungshebels sichergestellt ist. Im übrigen bietet diese Ausbildung die Möglichkeit, am Befestigungsbolzen unmittelbar vor dem Axialabschnitt eine axiale Anschlagschulter für den Kupplungsausrückhebel vorzusehen, so daß bei der Montage ein zu weites Hindurchführen des Bolzens durch die Aufnahmeöffnung des Kupplungsausrückhebels nicht möglich ist.

Zur Erleichterung des Anbaus der Einrichtung am Kupplungsausrückhebel sollte der Axialabschnitt des Befestigungsbolzens im Zentrum hohl und im Wandbereich zungenförmig ausgebildet sein. Hierdurch wird die Einführbarkeit des Axialabschnitts in die Öffnung des Kupplungsausrückhebels vereinfacht. Im übrigen können dann zwei einander gegenüberliegende Zungen mit Außenvorsprüngen zur Verrastung am Öffnungsrand des Kupplungshebels ausgestattet sein, so daß die Einrichtung nach dem Einrasten unverlierbar mit dem Kupplungsausrückhebel verbunden ist und bei dem Einsetzen des eigentlichen Bolzenabschnitts in die Bohrung des Getriebeflansches nicht darauf geachtet werden muß, daß die vorausgehende Anordnung am Kupplungsausrückhebel nicht aufgehoben wird.

Weiterhin soll der Kupplungsausrückhebel, der durch ein an seinem der Stabilisierungs- und Abstützeinrichtung abgewandten Ende angreifendes Betätigungsmittel verschwenkbar ist, in seinem mittleren gabelförmig ausgebildeten Bereich stirnseitig an einem Gehäuse eines Ausrücklagers anliegen, wobei das Gehäuse gewölbte Anlageflächen aufweist, deren Scheitelpunkte in einer durch die Kupplungsachse gehenden Ebene liegen. Während seiner Schwenkbewegung rollt der gabelförmig ausgebildete Bereich des Kupplungsausrückhebels an den gewölbten Anlageflächen des Gehäuses ab, so daß die auf die Stabilisierungs- und Abstützeinrichtung übertragenen Querkräfte erheblich vermindert werden. Würden hohe Querkräfte am Kupplungsausrückhebel und somit auch an der Stabilisierungs- und Abstützeinrichtung auftreten, so hätten diese eine höhere Betätigungskraft sowie eine geringere Schwingungsisolierung und einen vorzeitigen Verschleiß der Stabilisierungs- und Abstützeinrichtung zur Folge.

In weiterer Ausgestaltung der Erfindung soll die Betätigungseinrichtung als hydraulischer Betätigungszylinder ausgebildet sein. Schließlich soll das Betätigungsmittel mit einem kunststoffbeschichteten Druckelement in eine sphärische Kalotte des Kupplungsausrückhebels eingreifen. Da sowohl die Stabilisierungs- und Abstützeinrichtung als auch die Beschichtung des Druckelements aus Kunststoff hergestellt sind, kann der Kupplungsausrückhebel als relativ dünnwandig ausgebildetes Blechteil hergestellt sein, das an den Angriffsstellen der Stabilisierungs- und Abstützeinrichtung sowie des Druckelements nicht gehärtet oder oberflächenbeschichtet sein muß.

Im folgenden wird die Erfindung unter Bezugnahme auf die Zeichnungen und dabei zugleich ausschließlich beispielhaft weiter im Detail beschrieben; in den Zeichnungen zeigen:
- Fig. 1: einen axialen Längsschnitt durch eine erste Ausführungsform, angebaut an einem Kupplungsausrückhebel, jedoch noch im Herstellungszustand,
- Fig. 2: einen axialen Längsschnitt entlang der Linie II-II der Fig. 1,
- Fig. 3: einen axialen Längsschnitt durch die Einrichtung der Fig. 1 im Arbeitszustand, angebaut an einem Kupplungsausrückhebel und abgestützt an einem Getriebegehäuse,
- Fig. 4: einen axialen Längsschnitt entlang der Linie IV-IV der Fig. 3.
- Fig. 5: einen axialen Längsschnitt durch eine zweite Ausführungsform, angebaut an einem Kupplungsausrückhebel, jedoch nicht im Herstellungszustand,
- Fig. 6: einen axialen Längsschnitt durch dieselbe Einrichtung entlang der Linie VI-VI der Fig. 5,
- Fig. 7: einen axialen Längsschnitt durch die Einrichtung der Fig. 5 im Arbeitszustand, angebaut an einem Kupplungsausrückhebel und abgestützt an einem Getriebegehäuse,
- Fig. 8: einen axialen Längsschnitt entlang der Linie VIII-VIII der Fig. 7 und
- Fig. 9: einen Längsschnitt durch eine Teilansicht einer Kupplungsglocke mit darin angeordneter Kupplungsausrückeinrichtung.

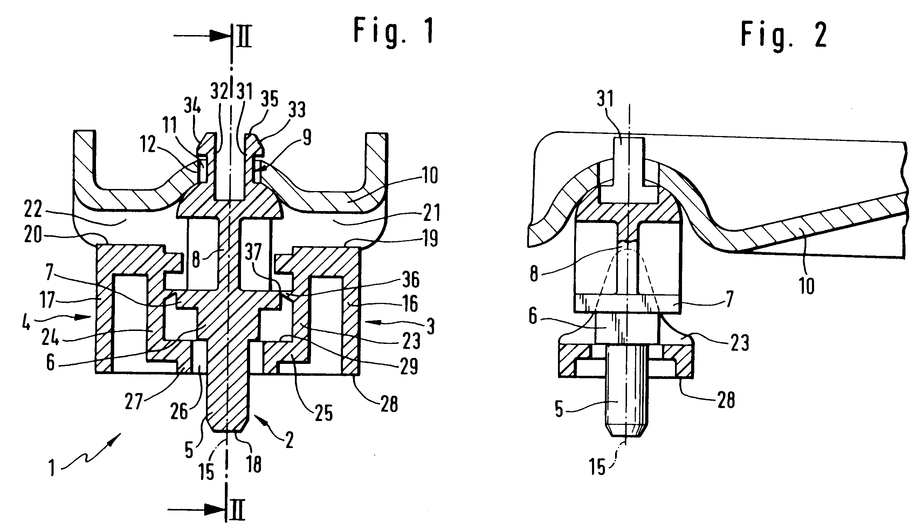

Die in den Fig. 1 und 2 in zwei um 90° zueinander versetzten Ebenen im axialen Längsschnitt dargestellte Stabilisierungs- und Abstützeinrichtung 1 besteht aus zwei im Herstellungszustand miteinander verbundenen, im Arbeitszustand jedoch voneinander getrennten Teilen, nämlich einem Befestigungsbolzen 2 und zwei stets miteinander verbundenen Stabilisierungsbereichen 3 und 4.

Der Befestigungsbolzen 2 besteht aus einem eigentlichen Bolzenabschnitt 5, einem an diesen anschließenden verdickten Bereich 6, einem hieran anschließenden Flansch 7, einem axialen Verlängerungsabschnitt 8 und einem Axialabschnitt 9.

Der Axialabschnitt 9 dient zur Festlegung der Einrichtung 1 an einem Kupplungsausrückhebel 10 bei gleichzeitiger Zentrierung durch Hindurchführung des Aixalabschnitts 9 durch eine im Kupplungsausrückhebel 10 vorgesehene Öffnung 11, deren Rand 12 die seitliche Anlage für den Axialabschnitt 9 bildet. Der außenseitig glatte, also gewindefreie eigentliche Bolzenabschnitt 5 dient zur Einführung in eine Bohrung 13 eines geeigneten Gehäuseteils 14 des Fahrzeuggetriebes derart, daß die Einrichtung 1 über den Bolzenabschnitt 5 und den Axialabschnitt 9 zwischen dem genannten Gehäuseteil 14 und dem Kupplungsausrückhebel 10 unverlierbar angeordnet ist. Dies ist dadurch gewährleistet, daß mittels der zur Kupplung gehörigen Feder, insbesondere einer Tellerfeder, der Kupplungsausrückhebel 10 gegen den Gehäuseteil 14 gedrückt ist, so daß der Bolzenabschnitt 5 nicht aus der Bohrung 13 herausrutschen kann.

Die Stabilisierungsbereiche 3 und 4 bestehen aus zwei zu der Längsachse 15 des Befestigungsbolzens 2 einander diametral gegenüberliegenden Hohlkörpern 16 und 17, die zum freien Ende 18 des Befestigungsbolzens 2 hin offen sind. Beide Hohlkörper 16, 17 sind an ihrer dem Axialabschnitt 9 des Bolzen 2 zugewandten Seite mit einer etwa halbzylindrischen Außenfläche 19 bzw. 20 ausgestattet, die mit entsprechend gestalteten Ausformungen 21, 22 am Kupplungsausrückhebel 10 zusammenarbeiten; die letztgenannte Ausbildung ist solange nicht zwingend erforderlich, wie zur Schwenklagerung der Einrichtung 1 gegenüber dem Kupplungsausrückhebel 10 die hierzu bekannte sphärische Gestaltung eines bestimmten Abschnitts des Befestigungsbolzens bei zugehöriger Gestaltung der Paarungsfläche des Kupplungshebels 2 vorgesehen ist.

Im dargestellten Fall sind die Außenflächen 19, 20 als von außen gesehen konvexe Flächen und die Ausformungen 21, 22 als zugehörige Ausnehmungen ausgebildet. Die Außenflächen 19, 20 können alternativ auch konkave Flächen sein; in diesem Fall sind die Ausformungen 21, 22 dann von außen gesehen konvexe Flächen.

Die, wie angegeben, gestalteten Stabilisierungsbereiche 3, 4 bieten sich funktionell zur Verwendung zugleich als Schwenklagerbereiche an, werden aber bei der Ausführungsform der Fig. 1 bis 4 nicht zu diesem Zweck verwendet.

Die Hohlkörper 16, 17 besitzen eine von ihren halbzylindrischen Flächen 19, 20 ausgehende und dem Befestigungsbolzen 2 zugewandte Wand 23 bzw. 24, über die die Hohlkörper 16, 17 mittels eines Stegs 25 mit Durchtrittsöffnung 26 in Verbindung stehen. Die Durchtrittsöffnung 26 ist so bemessen, daß der verdickte Bereich 6 des Bolzens 2 in ihr verschiebbar aufzunehmen ist. Im Bereich der Durchtrittsöffnung 26 schließt an den Steg 25 in Axialrichtung des Befestigungsbolzens 2 ein Axialansatz 27 an, der bis in die Ebene des rückwärtigen Endes 28 der Hohlkörper 16, 17 geführt ist. Die den Außenflächen 19, 20 zugewandte Fläche 29 des Stegs 25 ist vom rückwärtigen Ende 28 in einem Abstand angeordnet, der der axialen Länge des verdickten Bereichs 6 entspricht. Die Fläche 29 ist zugleich vom Scheitel der Außenflächen 19, 20 in einem Abstand angeordnet, der der Summe der axialen Längen des Verlängerungsabschnitts 8 und des Flanschs 7 entspricht. Hierdurch ist gewährleistet, daß bei Anlage der Außenflächen 19, 20 an den Paarungsflächen der Ausformungen 21, 22 der Verlängerungsabschnitt 8 und der Flansch 7 vor der gegenüberliegenden Fläche des Kupplungsausrückhebels 10 im Bereich zwischen den Ausformungen 21 und 22 oder bei durchgehender Ausbildung derselben vor diesen liegen kann.

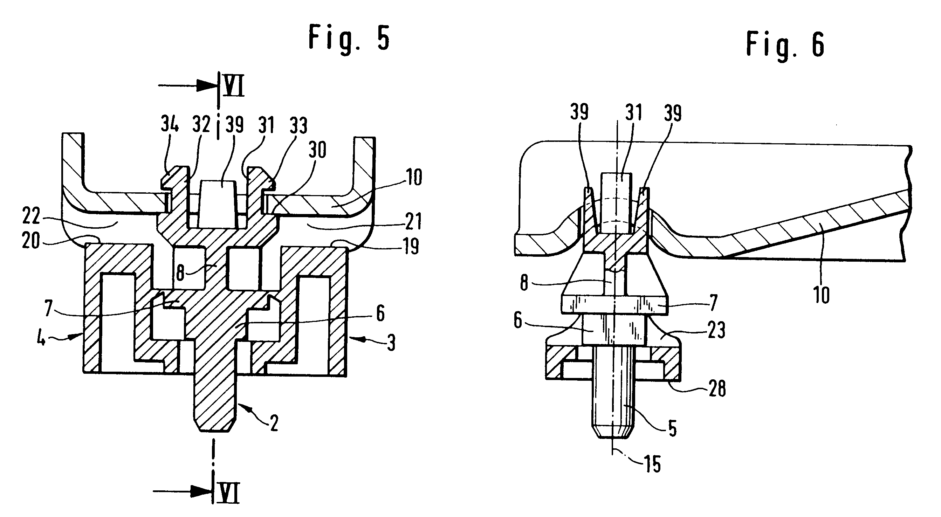

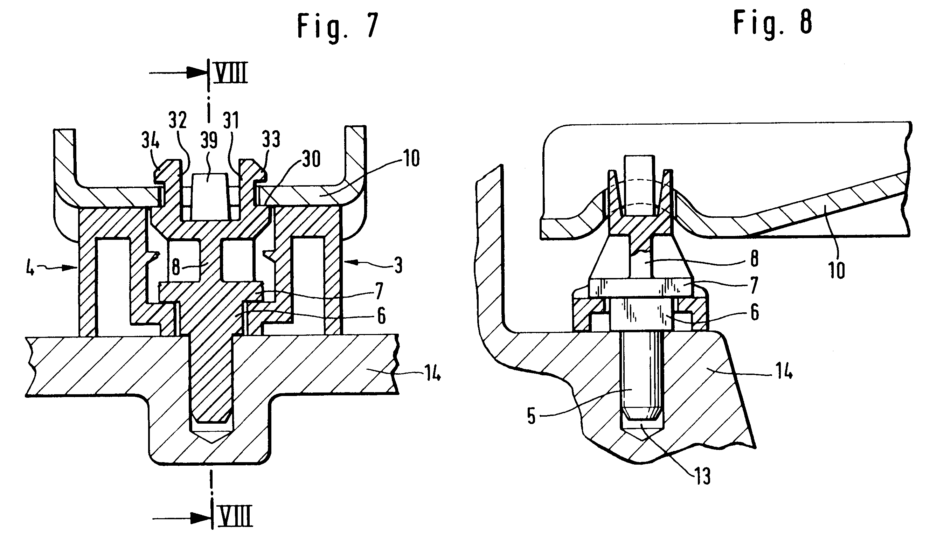

Die Stabilisierungsbereiche 3, 4 und der Befestigungsbolzen 2 der Ausführungsform der Fig. 5 bis 8 entsprechen den der Ausführungsform der Fig. 1 bis 4. Die einzige Unterschiedlichkeit des Befestigungsbolzens 2 besteht darin, daß bei der zweiten Ausführungsform kein sphärisch gestalteter Abschnitt am Befestigungsbolzen zur Schwenklagerung der Einrichtung 1 am Kupplungsausrückhebel 10 vorgesehen ist. Stattdessen dienen die die bei der ersten Ausführungsform vorgesehenen Stabilisierungsbereiche 3, 4 zugleich als Schwenklagerbereiche, weshalb in diesem Fall die Ausstattung mit den halbzylindrischen Außenflächen 19, 20 unbedingt erforderlich ist.

Eine weitere Unterschiedlichkeit besteht darin, daß am Verlängerungsabschnitt 8 eine axiale Anschlagschulter 30 vorgesehen ist, mit der der Bolzen 2 gegen die gegenüberliegende Fläche des Kupplungsausrückhebels 10 zur Anlage bringbar ist; diese Fläche kann in der Fläche der Ausformungen 21, 22 bestehen.

Die nachfolgend beschriebene Gestaltung betrifft wieder beide Ausführungsformen. Danach ist der Axialabschnitt 9 des Befestigungsbolzens 2 zentral hohl und im Wandbereich zungenförmig ausgebildet. Dabei sind zwei einander diametral gegenüberliegende Zungen 31, 32 mit Außenvorsprüngen 33 bzw. 34 vorgesehen. Diese dienen zur Verrastung am Öffnungsrand 12 des Kupplungsausrückhebels 10. Am freien Ende 35 ist der Axialabschnitt 9 zur erleichterten Hindurchführung durch die Öffnung 11 des Kupplungsausrückhebels 10 außenseitig verjüngt.

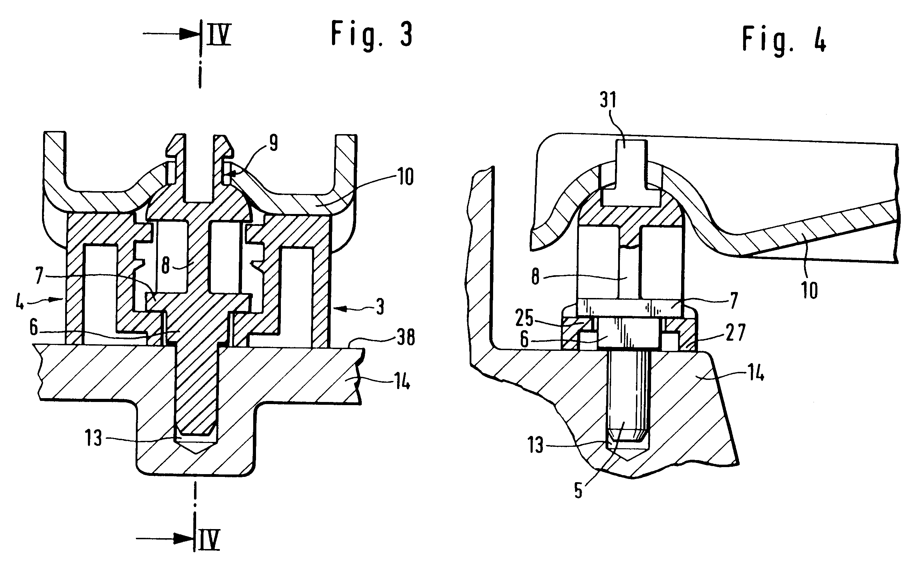

Der, wie beschrieben, zwischen den Hohlkörpern 16, 17 angeordnete Befestigungsbolzen 2 ist von seiner Herstellung her einstückig mit den Hohlkörpern 16, 17 ausgebildet, und zwar durch Vorsehung eines Verbindungsabschnitts 36 mit Sollbruchstelle 37. Der Verbindungsabschnitt 36 ist im dargestellten Fall am Flansch 7 angesetzt. Diese Einstückigkeit gewährleistet nicht nur eine gegenseitige Unverlierbarkeit von Befestigungsbolzen 2 und Hohlkörpern 16, 17 sondern erleichtert den Anbau der Einrichtung 1 am Kupplungsausrückhebel 10, da die Einrichtung 1, wie in Fig. 1 dargestellt, lediglich mit ihrem Axialabschnitt 9 durch die Öffnung 11 im Kupplungsausrückhebel 10 hindurchgedrückt werden muß, ohne dabei Rücksicht auf die Hohlkörper 16, 17 nehmen zu müssen. Bei Einführung des Bolzenabschnitts 5 in die Bohrung 13 des Gehäuseteils 14 und anschließender Ausübung eines Axialdrucks auf den Bolzen 2 mittels des Kupplungsausrückhebels 10 wird der Bolzenabschnitt 5 in die Bohrung 13 zunächst so weit eingeschoben, bis das rückwärtige Ende 28 der Hohlkörper 16, 17 an der gegenüberliegenden Fläche 38 des Gehäuseteils 14 zur Anlage kommt. Bei weiterer Druckausübung, also bei gegenseitiger Annäherung von Kupplungsausrückhebel 10 und Gehäuseteil 14, bricht die Sollbruchstelle 37 im Verbindungsabschnitt 36 auf, so daß schließlich der Arbeitszustand erreichbar ist, der aus Fig. 3 und 4 bzw. 7 und 8 zu ersehen ist.

Im übrigen sind im Wandbereich des Axialabschnitts 9 zwischen Zungen 31, 32 weitere Zungen 39 ohne Außenvorsprung vorgesehen, die ebenso wie die Zungen 31, 32 mit am Öffnungsrand 12 des Kupplungshebels 10 anliegen.

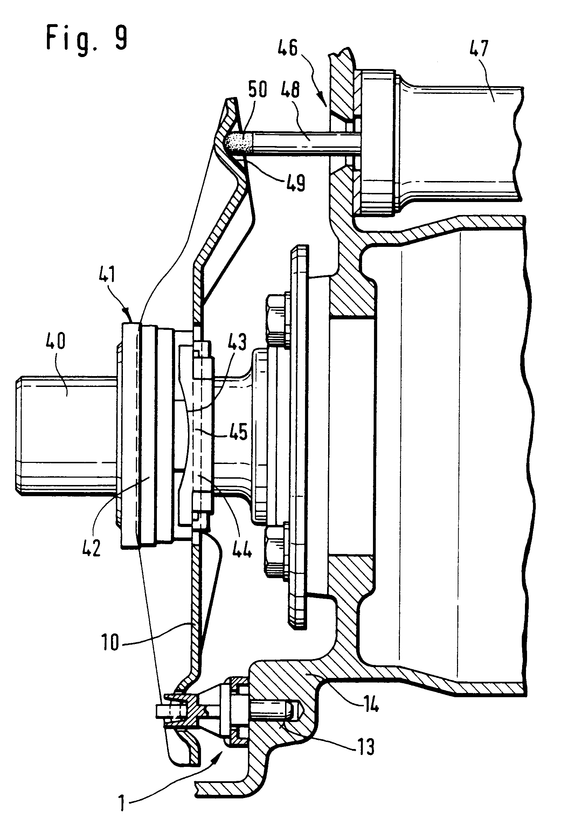

In der Fig. 9 sind weitere Elemente der Kupplungsausrückeinrichtung, die mit der Stabilisierungs- und Abstützeinrichtung 1 zusammenwirken dargestellt. Mit dem Gehäuseteil 14 des Getriebegehäuses ist eine Führungshülse 40 verschraubt, auf welcher ein Ausrücklager 41 angeordnet ist. Dieses Ausrücklager 41 weist ein Gehäuse 42 auf, welches an seiner einen Stirnseite gewölbte Anlageflächen 43 hat. Der Kupplungsausrückhebel 10, der als Blechteil hergestellt ist, hat im mittleren Bereich eine Ausnehmung 44 und umgreift somit gabelförmig das Gehäuse 42 in einem Bereich von dessen geringsten Durchmesser. Der gabelförmige Bereich 45 liegt an den beiden gewölbten Anlageflächen 43 des Gehäuses 42 an.

Der Stabilisierungs- und Abstützeinrichtung 1 gegenüberliegend greift am Kupplungsausrückhebel 10 eine Betätigungseinrichtung 46 an, die einen hydraulischen Betätigungszylinder 47 und eine als Druckelement dienende Kolbenstange 48 aufweist. Die Kolbenstange 48 greift mit ihrem Ende, das kunststoffbeschichtet ist, in eine sphärische Kalotte 49 des Kupplungsausrückhebels 10 ein. Der kunststoffbeschichtete Abschnitt ist in der Figur mit 50 bezeichnet.

Das Gehäuse 42 des Ausrücklagers 41 wirkt an seiner den gewölbten Anlageflächen 43 gegenüberliegenden Stirnseite mit nicht näher dargestellten Zungen einer Tellerfeder der Kupplung des Kraftfahrzeugs zusammen. Aus der Darstellung ist zu entnehmen, daß der Kupplungsausrückhebel 10 beim Einleiten einer Betätigungskraft über das Betätigungsmittel 46 über seinen gabelförmig ausgebildeten Bereich 45 an den gewölbten Anlageflächen 43 des Gehäuses 42 abrollt. Diese Abwälzbewegung führt dazu, daß in der Stabilisierungs- und Abstützeinrichtung 1 sehr geringe Querkräfte auftreten, die andernfalls die Funktion der Stabilisierungs- und Abstützeinrichtung 1 erheblich beeinträchtigen würden. Da am Kupplungsausrückhebel 10 an beiden Enden Kunststoffelemente angreifen, nämlich eine Kunststoffbeschichtung 50 des Druckelements 48 und die aus Kunststoff hergestellte Stabilisierungs- und Abstützeinrichtung 1, kann der Kupplungsausrückhebel 10 aus einem relativ dünnwandigen Blechteil, das weder gehärtet noch oberflächenbeschichtet ist, hergestellt sein.

## Patentansprüche

1. Stabilisierungs- und Abstützeinrichtung (1) für die Schwenklagerung eines Kupplungsausrückhebels (10), bestehend aus einem Befestigungsbolzen (2) mit einem Befestigungsabschnitt aus polymerem Material, einem Schwenklagerbereich an der dem Kupplungshebel zuzuwendenden Seite und zwei zur Bolzenlängsachse (15) diametral angeordneten Stabilisierungsbereichen (3,4), wobei am Befestigungsbolzen ein im Durchmesser verdickter Bereich (6) und auf diesen folgend ein Verlängerungsabschitt (8) vorgesehen sind, **dadurch gekennzeichnet**, daß der Befestigungsabschnitt des Befestigungsbolzens (2) als umfangsseitig von einem Öffnungsrand (12) des Kupplungsausrückhebels (10) zu dessen radialer Führung umfaßbarer Axialabschnitt (9) ausgebildet ist, daß die beiden Stabilisierungsbereiche (3, 4) im Arbeitszustand der Einrichtung (1) zur Bolzenlängsachse (15) mittels des verdickten Bereichs (6) zentriert sind und über einen Verbindungssteg (25) mit zentrischer Durchtrittsöffnung (26) zur verschiebbaren Aufnahme des verdickten Bereichs (6) miteinander und im Herstellungszustand über einen Verbindungsabschnitt (36) mit Sollbruchstelle (37) mit dem Befestigungsbolzen (2) in Verbindung stehen und daß die gesamte Einrichtung (1) aus polymerem Material besteht.

2. Einrichtung nach Anspruch 1, **dadurch gekennzeichnet**, daß zwischen dem verdickten Bereich (6) und dem Verlängerungsabschnitt (8) ein Flansch (7) vorgesehen und der Verbindungsabschnitt (36) an diesem angeordnet ist.

3. Einrichtung nach Anspruch 1 oder 2, **dadurch gekennzeichnet**, daß die beiden Stabilisierungsbereiche (3, 4) zugleich die Schwenklagerbereiche darstellen.

4. Einrichtung nach Anspruch 3, **dadurch gekennzeichnet**, daß die Stabilisierungsbereiche (3, 4) an ihrer dem Axialabschnitt (9) des Befestungsbolzens (2) zugewandten Seite je eine etwa halbzylindrische Außenfläche (19, 20) aufweisen und diese beiden Außenflächen (19, 20) miteinander fluchten.

5. Einrichtung nach Anspruch 4, **dadurch gekennzeichnet**, daß die beiden Stabilisierungsbereiche (3, 4) als zum freien Ende (18) des Befestigungsbolzens (2) offene Hohlkörper (16, 17) ausgebildet und diese beiden Hohlkörper (16, 17) über einen Steg (25) mit zentrischer Durchtrittsöffnung (26) zur verschiebbaren Aufnahme des verdickten Bereichs (6) verbunden ist.

6. Einrichtung nach Anspruch 5, **dadurch gekennzeichnet**, daß der Abstand zwischen der dem Axialabschnitt (9) des Befestigungsbolzens (2) zugewandten Fläche (29) des Stegs (25) und dem rückwärtigen Ende (28) der Hohlkörper (16, 17) der axialen Länge des verdickten Bereichs (6) des Befestigungsbolzens (2) entspricht.

7. Einrichtung nach mindestens einem der Ansprüche 3 bis 6, **dadurch gekennzeichnet**, daß sich die den Befestigungsbolzen (2) umgebende Durchtrittsöffnung (26) des Stegs (25) durch einen Axialansatz (27) des Stegs (25) hindurch bis in die Ebene des rückwärtigen Endes (28) der Hohlkörper (16, 17) erstreckt.

8. Einrichtung nach mindestens einem der Ansprüche 3 bis 7, **dadurch gekennzeichnet**, daß der Abstand zwischen der dem Axialabschnitt (9) des Befestigungsbolzens (2) zugewandten Fläche (29) des Stegs (25) und dem Scheitel der halbzylindrischen Außenfläche (19, 20) der Hohlkörper (16, 17) mindestens der Summe der axialen Länge des Flanschs (7) und des Verlängerungsabschnitts (8) entspricht.

9. Einrichtung nach mindestens einem der Ansprüche 1 bis 8, **dadurch gekennzeichnet**, daß der Axialabschnitt (9) des Befestigungsbolzens (2) im Zentrum hohl und im Wandbereich zungenförmig ausgebildet ist.

10. Einrichtung nach Anspruch 9, **dadurch gekennzeichnet**, daß zwei einander diametral gegenüberliegende Zungen (31, 32) mit Außenvorsprüngen (33, 34) zur Verrastung am Öffnungsrand (12) des Kupplungshebels (10) ausgestattet sind.

11. Einrichtung nach Anspruch 10, **dadurch gekennzeichnet**, daß zwei einander diametral gegenüberliegende weitere Zungen (39) ohne Außenvorsprünge vorgesehen sind.

12. Einrichtung nach Anspruch 1, **dadurch gekennzeichnet**, daß der Kupplungsausrückhebel (10), der durch ein an seinem der Stabilisierungs- und Abstützeinrichtung (1) abgewandten Ende angreifendes Betätigungsmittel (46) verschwenkbar ist, in seinem mittleren gabelförmig ausgebildeten Bereich (45) stirnseitig an einem Gehäuse (42) eines Ausrücklagers (41) anliegt, wobei das Gehäuse (42) gewölbte Anlageflächen (43) aufweist, deren Scheitelpunkte in einer durch die Kupplungsachse gehende Ebene liegen.

13. Einrichtung nach Anspruch 12, **dadurch gekennzeichnet**, daß die Betätigungsmittel (46) einen hydraulischen Betätigungszylinder (47) aufweisen.

14. Einrichtung nach Anspruch 12, **dadurch gekennzeichnet**, daß die Betätigungsmittel (46) ein Druckelement (48) aufweisen, das an seinem in eine sphärische Kalotte (49) des Kupplungsausrückhebels (10) eingreifenden Ende eine Kunststoffbeschichtung (50) hat.

## Claims

1. Stabilizing and support device (1) for the pivot-mounting of a clutch release lever (10), comprising a securing pin (2) having a securing portion made of a polymeric material, a pivot-mounting region on the side intended to face the clutch lever, and two stabilizing regions (3, 4) arranged diametrically of a longitudinal axis (15) of the pin, there being provided on the securing pin, a region (6) thickened in diameter and following this, an extension portion (8), characterized in that the securing portion of the securing pin (2) is configured as an axial portion (9) which, for its radial guidance, can be circumferentially surrounded by an edge (12) of an opening of the clutch release lever (10), in the operating state of the device (1), the two stabilizing regions (3, 4) are centered relative to the longitudinal axis (15) of the pin (2) with the help of the thickened region (6) and connected to each other by a connecting web (25) having a central pass-through aperture (26) for displaceably receiving the thickened region (6), in the as-manufactured state, the two stabilizing regions (3, 4) are connected to the securing pin (2) by a connecting portion (36) comprising a predetermined breaking point (37), and the entire device (1) is made of a polymeric material.

2. Device according to claim 1, characterized in that a flange (7) is provided between the thickened region (6) and the extension portion (8), and the connecting portion (36) is arranged on this flange (7).

3. Device according to claim 1 or 2, characterized in that the two stabilizing regions (3, 4) at the same time constitute the pivot-mounting regions.

4. Device according to claim 3, characterized in that, at its end facing the axial portion (9) of the securing pin (2), each stabilizing region (3, 4) comprises an approximately semicylindrical outer surface (19, 20), and these two outer surfaces (19, 20) are aligned with each other.

5. Device according to claim 4, characterized in that the two stabilizing regions (3, 4) are made as hollow bodies (16, 17) which are open towards the free end (18) of the securing pin (2), and these two hollow bodies (16, 17) are connected to each other by a web (25) having a central pass-through aperture (26) for displaceably receiving the thickened region (6).

6. Device according to claim 5, characterized in that the distance between the surface (29) of the web (25) facing the axial portion (9) of the securing pin (2) and the tail-end (28) of the hollow bodies (16, 17) corresponds to the axial length of the thickened region (6) of the securing pin (2).

7. Device according to at least one of the claims 3 to 6, characterized in that the pass-through aperture (26) of the web (25) surrounding the securing pin (2) extends through an axial projection (27) of the web (25) upto the plane of the tail-end (28) of the hollow bodies (16, 17).

8. Device according to at least one of the claims 3 to 7, characterized in that the distance between the surface (29) of the web (25) facing the axial portion (9) of the securing pin (2) and the vertex of the semicylindrical outer surfaces (19, 20) of the hollow bodies (16, 17) corresponds at least to the sum of the axial lengths of the flange (7) and the extension portion (8).

9. Device according to at least one of the claims 1 to 8, characterized in that the axial portion (9) of the securing pin (2) is hollow at the centre and tongue-shaped in the wall region.

10. Device according to claim 9, characterized in that two tongues (31, 32) situated diametrically opposite each other comprise external projections (33, 34) for locking on the edge (12) of the opening of the clutch release lever (10).

11. Device according to claim 10, characterized in that two further tongues (39) without external projections and situated diametrically opposite each other are provided.

12. Device according to claim 1, characterized in that the clutch release lever (10), which can be pivoted by an actuating means (46) engaging its end facing away from tha stabilizing and support device (1), bears in its central fork-shaped region (45) endwise against a housing (42) of a release bearing (41), the housing (42) comprising curved contact surfaces (43) whose vertices are situated in a plane passing through the clutch axis.

13. Device according to claim 12, characterized in that the actuating means (46) comprise a hydraulic actuating cylinder (47).

14. Device according to claim 12, characterized in that the actuating means (46) comprise a pressure element (48) whose end engaging a spherical concavity (49) of the clutch release lever (10) has a plastic coating (50).

## Revendications

1. Dispositif de stabilisation et de support (1) pour le montage pivotant d'un levier de débrayage (10), comprenant un boulon de fixation (2) ayant une partie de fixation en matière polymère, une région de montage pivotant agencée du côté destiné à faire face au levier de débrayage, et deux régions de stabilisation (3, 4) agencées diamétralement par rapport à l'axe longitudinal (15) du boulon (2), il étant prévu sur le boulon de fixation (2), une région de diamètre augmenté (6) et, se raccordant à celle-ci, une partie de prolongement (8), caractérisé en ce que la partie de fixation du boulon de fixation (2) est configurée sous la forme d'une partie axiale (9) qui, pour son guidage radial, peut être entouré en direction périphérique par un bord (12) d'ouverture du levier de débrayage (10), en ce qu'à l'état de fonctionnement du dispositif (1), les deux régions de stabilisation (3, 4) sont centrées par rapport à l'axe longitudinal (15) du boulon par l'intermédiaire de la région épaissie (6) en étant reliées l'une à l'autre à l'aide d'une entretoise de liaison (25) ayant une ouverture centrale de passsage (26) pour la réception en déplacement de la région épaissie (6), en ce que, dans l'état de fabrication, les régions de stabilisation (3, 4) sont reliées au boulon de fixation (2) par l'intermédiaire d'une partie de liaison (36) ayant un point destiné à la rupture (37), et en ce que le dispositif (1) entier est réalisé en une matière polymère.

2. Dispositif selon la revendication 1, caractérisé en ce qu'il est prévu entre la région épaissie (6) et la partie de prolongement (8), une bride (7) sur laquelle est agencée la partie de liaison (36).

3. Dispositif selon la revendication 1 ou 2, caractérisé en ce que les deux régions de stabilisation (3, 4) constituent en même temps les régions de montage pivotant.

4. Dispositif selon la revendication 3, caractérisé en ce que, de leur côté faisant face à la partie axiale (9) du boulon de fixation (2), les régions de stabilisation (3, 4) comprennent, chacune, une surface externe (19, 20) globalement de forme demi-cylindrique, et en ce que ces deux surfaces externes (19, 20) sont dans l'alignement l'une de l'autre.

5. Dispositif selon la revendication 4, caractérisé en ce que les deux régions de stabilisation (3, 4) sont configurées sous la forme de corps creux (16, 17) qui sont ouverts vers l'extrémité libre (18) du boulon de fixation (2), et en ce que ces deux corps creux (16, 17) sont reliés l'un à l'autre par une entretoise (25) ayant une ouverture centrale de passage (26) pour la réception en déplacement de la région épaissie (6).

6. Dispositif selon la revendication 5, caractérisé en ce que la distance entre la surface (29) de l'entretoise (25) faisant face à la partie axiale (9) du boulon de fixation (2) et l'extrémité arrière (28) des corps creux (16, 17) correspond à la longueur axiale de la région épaissie (6) du boulon de fixation (2).

7. Dispositif selon au moins l'une des revendications 3 à 6, caractérisé en ce que l'ouverture de passage (26) prévue sur l'entretoise (25) et entourant le boulon de fixation (2) s'étend à travers un prolongement axial (27) de l'entretoise (25) jusque dans le plan de l'extrémité arrière (28) des corps creux (16, 17).

8. Dispositif selon au moins l'une des revendications 3 à 7, caractérisé en ce que la distance entre la surface (29) de l'entretoise (25) faisant face à la partie axiale (9) du boulon de fixation (2) et le sommet des surfaces externes demi-cylindriques (19, 20) des corps creux (16, 17) correspond au moins à la somme de la longueur axiale de la bride (7) et de la partie de prolongement (8).

9. Dispositif selon au moins l'une des revendications 1 à 8, caractérisé en ce que la partie axiale (9) du boulon de fixation (2) a une configuration creuse au centre et sous la forme de languettes dans la région des parois.

10. Dispositif selon la revendication 9, caractérisé en ce que deux languettes (31, 32) qui sont situées en des points diamétralement opposés sont pourvues de saillies externes (33, 34) destinées à s'enclencher sur le bord (12) d'ouverture du levier de débrayage (10).

11. Dispositif selon la revendication 10, caractérisé en ce qu'il est prévu deux autres languettes (39) sans saillies externes et qui sont situées en des points diamétralement opposés.

12. Dispositif selon la revendication 1, caractérisé en ce que le levier de débrayage (10), qui peut être pivoté par un moyen d'actionnement (46) engageant son extrémité opposée au dispositif de stabilisation et de support (1), s'appuie, à sa région centrale en forme de fourchette, frontalement contre un boîtier (42) d'une butée de débrayage (41), ledit boîtier (42) comprenant des surfaces d'appui incurvées (43) dont les sommets se trouvent dans un plan passant par l'axe de l'embrayage.

13. Dispositif selon la revendication 12, caractérisé en ce que les moyens d'actionnement (46) comprennent un vérin hydraulique (47) d'actionnement.

14. Dispositif selon la revendication 12, caractérisé en ce que les moyens d'actionnement (46) comprennent un élément de pression (48) qui possède un revêtement en matière plastique (50) sur son extrémité qui s'engage dans une calotte sphérique (49) du levier de débrayage (10).
